# EUROPEAN PATENT APPLICATION

(11) **EP 1 561 570 A1**
(43) Date of publication of application: **10.08.2005**
(21) Application number: 04100383.1
(22) Date of filing: 03.02.2004
(51) Int. Cl.: B29D 23/00, B29C 47/06, F16L 9/147, B32B 1/08, B29C 35/08

(54) **Method for manufacturing a composite pipe with at least one extruded tubular part made up of polymeric material crosslinked by infrared**

(71) Applicant: Maillefer S.A., 1024 Ecublens (CH)
(72) Inventor: Jermann, Franz, 1122 Romanel-sur-Morges (CH); Desarzens, Philippe, 1807 Blonay (CH); Desarzens, Philippe, 1807 Blonay (CH)
(74) Representative: Scheuzger, Beat Otto

(57) **Abstract**

Method, for manufacturing a composite pipe (CP) with a tubular wall, this wall comprising at least one extruded tubular part (1), referred to as the first tubular part (1), this first tubular part (1) being made up of a first polymeric material (100),
this method being characterized in that the step of extruding the first tubular part (1) of a first polymeric material (100) involves the use of a first polymeric material (100) of the type capable of being cross-linked by infrared radiation, and this step of extruding the first tubular part (1) of said material is immediately followed by a step of irradiating the extruded first tubular part (1) with infrared radiation in order to accomplish said cross-linking reaction.

## Description

The invention relates to a method of manufacturing composite pipes with a tubular wall, this wall comprising at least one extruded tubular part made up of polymeric material.

The invention also relates to composite pipes with a tubular wall comprising at least one extruded tubular part made up of polymeric material, these composite pipes being manufactured according to the method of the invention.

Preferably, hereinafter, composite pipes are pipes consisting of a combination of at least one part made up of polymeric material with at least one part made up of a metallic material.

A typical construction for such a composite pipe consists of an element with a tubular wall, this tubular wall comprising:
an inner polymeric layer, referred to as the first tubular part, being made up of a first polymeric material,
a polymeric adhesive layer, referred to as the first layer, being made up of a first polymeric adhesive material,
a metallic layer, referred to as the third tubular part, being made up of a metallic material,
a polymeric adhesive layer, referred to as the second layer, being made up of a second polymeric adhesive material,
an outer polymeric layer, referred to as the second tubular part, being made up of a second polymeric material.

A typical manufacturing line for composite pipes comprises:
a first extruder, for the extrusion of the first tubular part, and
a second extruder, for the extrusion of the first adhesive layer made up of a first polymeric adhesive material,
a forming and welding station for the application of the third tubular part made up of metallic material, and
a third extruder with corresponding extrusion head for the extrusion of the second adhesive layer made up of a second polymeric adhesive material, and
a fourth extruder with corresponding extrusion head for the second tubular part, and the haul-off, winding and cutting equipment.

In a first step, the first tubular part, coated with a first polymeric adhesive, is manufactured in either a co-extrusion or a tandem method.

The solidified and dried first tubular part passes through the forming and welding station and then passes through a second extrusion group (comprising third extruder and fourth extruder), where the second adhesive layer made up of a second polymeric adhesive material and the second tubular part made up of the second polymeric material are extruded onto the third tubular part made up of metallic material.

The different materials may be applied simultaneously in a co-extrusion or a tandem method.

After final cooling, the composite pipe passes through a haul-off unit and a winding and cutting station, where appropriate coils are formed.

The present invention deals with composite pipes comprising at least one tubular part made up of cross-linked polyethylene.

For cross-linking, different methods are known:
- PEX-A: In this peroxide-based cross-linking method, a composition of polyethylene and peroxide is extruded. The cross-linking is achieved by raising the temperature above the activation temperature of the peroxide for a certain time in order to let the chemical reaction take place.
- PEX -B: In this silane-based cross-linking method, a mixture of polyethylene and a silane-based additive are extruded. The cross-linking reaction requires presence of water. The reaction will naturally occur in a natural environment by the effect of surrounding humidity, although water baths are used to achieve practical curing times.
- PEX-C: Radiation curing. Cross linking is achieved by irradiating the extrudate.

In known or possible methods for manufacturing composite pipes according to the description above, the cross-linked layer is manufactured by using a PEX-C method, a PEX-B method, or a PEX-A method with cross-linking achieved in a salt bath.

Common to all of the above methods for manufacturing composites pipes is that they need additional handling during the manufacture.

The present invention addresses the case where at least one of said composite pipes consists of PEX-A. The other polymeric material may be of any variety of suitable polymeric material, including polyethylene cross-linked according to any of the cross-linking methods cited above.

The invention sets forth a manufacturing method for continuous, in-line production of composite pipes with at least one tubular part made up of cross-linked material.

It eliminates the additional handling associated with known methods, and allows for a more efficient production of such pipes.

The solution put forward permits PEX-composite pipes to be produced in an in-line method in a continuous manner, eliminating the necessity of rewinding of pipes between manufacturing steps ( PEX-C) or subsequent off-line crosslinking (PEX-B).

It has effectively been found that infrared irradiation of an extruded polyethylene containing an adequate proportion of peroxide allows for fast and thorough cross-linking between the exit of the extrusion head and the calibrating cooling trough.

At the exit of the calibrating cooling trough, the product is ready for the subsequent manufacturing steps.

Therefore, an in-line manufacturing method for peroxide-cross-linked composite pipe is obtained, eliminating the necessity of rewinding and additional handling of the product of other methods.

Irradiating the extruded material with infrared radiation of adequate power and peak wavelength allows for rapid and in-depth heating of the polymeric and peroxide mixture, leading to a very rapid cross-linking reaction.

To achieve this objective, the invention has as its subject matter a method for manufacturing a composite pipe with a tubular wall, this wall comprising at least one extruded tubular part, referred to as the first tubular part, this first tubular part being made up of a first polymeric material.

In particular this method is characterized in that the step of extruding the first tubular part of a first polymeric material involves the use of a first polymeric material of the type capable of being cross-linked by infrared radiation, and this step of extruding the first tubular part of said material is immediately followed by a step of irradiating the extruded first tubular part with infrared radiation in order to accomplish said cross-linking reaction.

The invention will be better understood from reading the following description, given by way of non-limiting example, with reference to the attached drawings:
- Figure 1, a schematic example of a possible layout for composite pipes manufactured according to the method according to the invention,

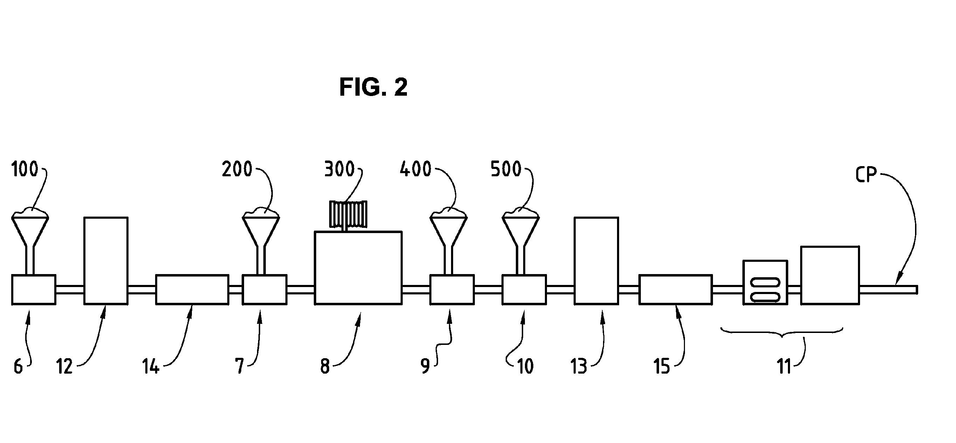

- Figure 2, a composite pipe manufacturing line which works according to the method of the invention.

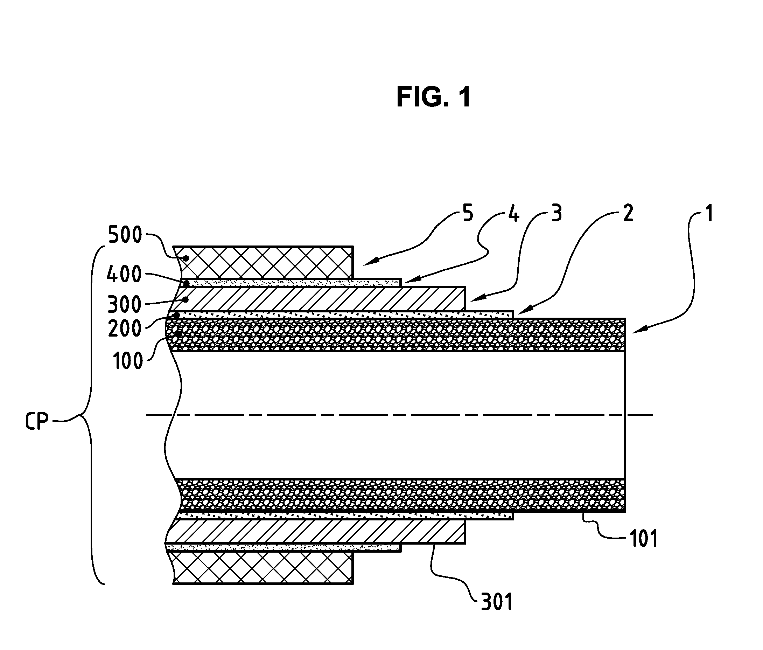

Referring to the drawings (Figure 1), one sees a typical construction of such a composite pipe CP consisting of an element with a tubular wall, this tubular wall comprising:
an inner polymeric layer, referred to as the first tubular part 1, being made up of a first polymeric material 100,
a polymeric adhesive layer, referred to as the first layer 2, made up of a first polymeric adhesive material 200,
a metallic layer, referred to as the third tubular part 3, being made up of a metallic material 300,
a polymeric adhesive layer, referred to as the second layer 4, being made up of a second polymeric adhesive material 400,
an outer polymeric layer, referred to as the second tubular part 5, being made up of a second polymeric material 500.

Referring to the drawings, one also sees a composite pipe manufacturing line which works according to the method of the invention in order to manufacture composite pipes.

This manufacturing line comprises:
a first extruder 6 for the extrusion of the first tubular part 1, and
a second extruder 7 for the extrusion of the first adhesive layer 2 made up of a first polymeric adhesive material 200,
a forming and welding station 8 for the application of third tubular part 3, made up of metallic material 300, and
a third extruder 9 with corresponding extrusion head for the extrusion of the second adhesive layer 4, made up of a second polymeric adhesive material 400, and
a fourth extruder 10 with corresponding extrusion head for the second tubular part 5, and the haul-off, winding and cutting equipment 11.

This manufacturing line also comprises cooling troughs 14, 15.

In this manufacturing line, one can see that, according to the invention, the first tubular part 1 is extruded, and passes immediately into an infrared oven 12 for cross-linking prior to calibration and cooling of said first tubular part 1.

Before passing through the metallic layer forming and welding station 8, the first adhesive layer 2 is applied onto the first tubular part 1.

Downstream from the forming and welding station 8, the second polymeric material 400 for the second adhesive layer 4 and the second polymeric material 500 for the second tubular part 5 are extruded onto the third tubular part 3, made up of metallic material 300.

Preferably, the second tubular part is extruded and passes immediately into an infrared oven 13 for cross-linking prior to cooling of the composite pipe.

As has already been mentioned, the invention relates to a method for manufacturing a composite pipe CP with a tubular wall, this wall comprising at least one extruded tubular part 1, referred to as the first tubular part 1, this first tubular part 1 being made up of a first polymeric material 100.

According to this method, the step of extruding the first tubular part 1 of a first polymeric material 100 involves the use of a first polymeric material 100 of the type capable of being cross-linked by infrared radiation and this step of extruding the first tubular part 1 of said material is immediately followed by a step of irradiating the extruded first tubular part 1 with infrared radiation in order to accomplish said cross-linking reaction.

The invention also relates to a method for manufacturing a composite pipe CP with a tubular wall which also comprises a third tubular part 3, this third tubular part 3 being made up of non-polymeric material 300, and being coaxially arranged on the first tubular part 1.

According to this method, the step of irradiating the extruded first tubular part 1 with infrared radiation in order to accomplish said cross-linking reaction is followed by:
a step of extruding a first adhesive layer 2, made up of a first adhesive material 200 on an external face 101 of the first tubular part 1, referred to as said first external face, and
a step of fixing the third tubular part 3 made up of non-polymeric material 300 on said first external face 101.

As aforementioned, the invention also relates to a method for manufacturing a composite pipe CP with a tubular wall, which wall also comprises an extruded second tubular part 5, this second tubular part 5 being made up of a second polymeric material 500 and being coaxially arranged around the first tubular part 1.

According to this method, the step of extruding the second tubular part 5 of a second polymeric material 500 involves the use of a second polymeric material 500 of the type capable of being cross-linked by infrared radiation, and this step of extruding the second tubular part 5 of such a material is immediately followed by a step of irradiating the extruded second tubular part 5 with infrared radiation in order to accomplish said cross-linking reaction.

The invention also relates to a method for manufacturing a composite pipe CP with a tubular wall which wall also comprises a third tubular part 3, this third tubular part 3 being made up of non-polymeric material 300 and being coaxially arranged between the first tubular part 1 and the second tubular part 5.

In this case, the step of irradiating the extruded first tubular part 1 with infrared radiation in order to accomplish said cross-linking reaction is followed by:
a step of extruding a first adhesive layer 2 on an external face of the first tubular part 1, said first external face 101, and
a step of fixing the third tubular part 3 made up of non-polymeric material 300 on said first external face 101, this third tubular part 3 of non-polymeric material 300 having an external face 301, referred to as said second external face 301, and
a step of extruding a second polymeric adhesive material 400 on the second external face 301, and then
the step consisting of extruding the second tubular part 5 of a second polymeric material 500 on the second external face 301 and the step consisting of irradiating the extruded second tubular part 5 with infrared radiation in order to accomplish said cross-linking reaction.

In a notable manner, the step consisting of fixing the third tubular part 3 of non-polymeric material 300 on the first external face 101 consists in forming and welding a metallic material on said first external face 101.

According to the invention, the cross-linking reaction is peroxide-based.

The cross-linking reaction is activated through thorough heating of the first polymeric material 100 of the first extruded tubular part 1 and thorough heating of the second polymeric material 500 of the second extruded tubular part 5.

In a notable manner, the heating of at least one of the polymeric materials which are the first polymeric material 100 and the second polymeric material 500 is achieved by means of infrared heaters 12, 13.

The invention also relates to composite pipes CP with a tubular wall comprising at least one extruded tubular part 1, 5 made up of polymeric material 100, 500, this composite pipes CP being manufactured according to the aforementioned method of the invention.

## Claims

1. Method, for manufacturing a composite pipe (CP) with a tubular wall, this wall comprising at least one extruded tubular part (1), referred to as the first tubular part (1), this first tubular part (1) being made up of a first polymeric material (100),
this method being **characterized in that** the step of extruding the first tubular part (1) of a first polymeric material (100) involves the use of a first polymeric material (100) of the type capable of being cross-linked by infrared radiation, and this step of extruding the first tubular part (1) of said material is immediately followed by a step of irradiating the extruded first tubular part (1) with infrared radiation in order to accomplish said cross-linking reaction.

2. Method according to claim 1, for manufacturing a composite pipe (CP) with a tubular wall which wall also comprises an extruded second tubular part (5), this second tubular part (5) being made up of a second polymeric material (500) and being coaxially arranged around the first tubular part (1),
this method being **characterized in that** the step of extruding the second tubular part (5) of a second polymeric material (500) involves the use of a second polymeric material (500) of the type capable of being cross-linked by infrared radiation, and this step of extruding the second tubular part (5) of such a material is immediately followed by a step of irradiating the extruded second tubular part (5) with infrared radiation in order to accomplish said cross-linking reaction.

3. Method, according to claim 1, for manufacturing a composite pipe (CP) with a tubular wall which also comprises a third tubular part (3), this third tubular part (3) being made up of non-polymeric material (300), and being coaxially arranged on the first tubular part (1),
this method being **characterized in that** the step of irradiating the extruded first tubular part (1) with infrared radiation in order to accomplish said cross-linking reaction is followed by:
a step of extruding a first adhesive layer (2), made up of a first adhesive material (200) on an external face (101) of the first tubular part (1), referred to as said first external face, and
a step of fixing the third tubular part (3), made up of non-polymeric material (300) on said first external face (101).

4. Method according to claim 2, for manufacturing a composite pipe (CP) with a tubular wall which wall also comprises a third tubular part (3), this third tubular part (3) being made up of non-polymeric material (300) and being coaxially arranged between the first tubular part (1) and the second tubular part (5),
this method being **characterized in that** the step of irradiating the extruded first tubular part (1) with infrared radiation in order to accomplish said cross-linking reaction is followed by:
a step of extruding a first adhesive layer (2) on an external face of the first tubular part (1), said first external face (101), and
a step of fixing the third tubular part (3), made up of non-polymeric material (300), on said first external face (101), this third tubular part (3) of non-polymeric material (300) having an external face (301), referred to as said second external face (301), and
a step of extruding a second polymeric adhesive material (400) on the second external face (301), and then
the step consisting of extruding the second tubular part (5) of a second polymeric material (500) on the second external face (301) and the step consisting of irradiating the extruded second tubular part (5) with infrared radiation in order to accomplish said cross-linking reaction.

5. Method according to one of the claims 3 or 4, **characterized in that** the step consisting of fixing the third tubular part (3), of non-polymeric material (300), on the first external face (101) consists in forming and welding a metallic material on said first external face (101).

6. Method according to one of the claims 1 to 5, **characterized in that** the cross-linking reaction is peroxide-based.

7. Method according to one of the claims 1 to 6, **characterized in that** the cross-linking reaction is activated through thorough heating of the first polymeric material (100) of the first extruded tubular part (1).

8. Method according to one of the claims 1 to 6, **characterized in that** the cross-linking reaction is activated through thorough heating of the second polymeric material (500) of the second extruded tubular part (5).

9. Method according to any of the preceding claims **characterized in that** the heating of at least one of the polymeric materials which are the first polymeric material (100) and the second polymeric material (500) is achieved by means of infrared heaters (12, 13).

10. Composite pipes (CP) with a tubular wall comprising at least one extruded tubular part (1, 5) made up of polymeric material (100, 500), this composite pipes (CP) being manufactured according to the method of one of the claims 1 to 9.
